# EUROPEAN PATENT SPECIFICATION

(11) **EP 2 405 224 B1**
(45) Date of publication and mention of the grant of the patent: **05.09.2018**
(21) Application number: 10169012.1
(22) Date of filing: 09.07.2010
(51) Int. Cl.: F28F 9/02, B21D 53/08

(54) **Process for manufacturing a brazed heat exchanger**
Verfahren zur Herstellung eines gelöteten Wärmetauschers
Procédé de fabrication d'un échangeur de chaleur

(43) Date of publication of application: 11.01.2012
(73) Proprietor: MAHLE International GmbH, 70376 Stuttgart (DE)
(72) Inventor: Kunz, Marcin, 63-500 Ostrzeszow (PL); Obsadny, Krzysztof, 63-440 Raszkow (PL)
(74) Representative: BRP Renaud & Partner mbB Rechtsanwälte Patentanwälte Steuerberater

(56) References cited:
- EP-A2- 1 275 926
- JP-A- 3 260 595
- JP-A- 3 260 596
- US-A- 5 125 454
- US-A- 5 207 738
- US-A- 5 214 847
- US-A- 6 053 243

## Description

### TECHNICAL FIELD

The present invention relates to a process to manufacture a brazed heat exchanger as well as to a brazed heat exchanger.

### BACKGROUND OF THE INVENTION

Brazed heat exchangers exist since years. They usually comprise a pair of parallel tubular tanks transversally interconnected by a plurality of flat tubes, cooling fins being brazed between the flat tubes. A hot fluid entering via an inlet operated in a tubular tank flows through the transversal tubes, where it cools down, gets in the opposite tank, from where it exits via an outlet.

Furthermore, to increase the cooling efficiency of the heat exchanger, separators may split the tanks in a plurality of sectors. The hot fluid entering into the first sector of the first tank flows through a first set of tubes in fluid connection with said first sector. The fluid gets to the second tank and flows back to the first tank through a second set of tubes in fluid connection with a second sector of the first tank. The fluid is directed back and forth between the tanks thanks to a plurality of internal separators.

To manufacture heat exchangers of the above type, a typical process is to manufacture and form the individual components: tanks, tubes, fins, separators..., then to provide the components with brazing clad, to assemble the components and finally to braze the assembly in a furnace.

The tubular tanks are complex part to manufacture. The cost efficient technology of rolling versus extruding has been developed. Starting from a flat rectangular sheet of metal, slots are punched in the central part of the metal sheet, away from the edges and then the flat metal sheet is rolled. The slots dedicated to the separators are larger than the slots for the flat tubes. Indeed, a separator inserted through its slot, must occupy the entire internal section of the tubular tank. Thus, the slots for the separators are open through, at least, the largest width of the tank, measured transversally to the direction of insertion of the separator.

The rolling process generates a joining-line. The brazing clad has to be on both the tubular tanks and on the flat tubes in order to braze the tank in a rolled position as well as to braze the flat tubes to the tubular tank.

In US 2009/0173478 A1, Beamer discloses a heat exchanger of the prior art. The joining-line of the rolled tank is continued and diametrally opposed to the slots where are inserted the flat tubes. The brazing of this heat exchanger requires the tank and the transversal tubes to be provided with brazing clad.

In US5214847 Aoki discloses a heat exchanger which tanks are rolled in two steps, the parting line passing through the slots.

In a pursuit for optimization of quality and cost, the current known process presents several issues.

The tubular tank, the flat tubes and the separators are all provided with brazing clad which requires multiple operations and adds cost.

The slot for a separator being very large, the separator itself is not very well positioned before brazing.

This design results in increased time to manufacture and assemble and an increased overall cost. It is important to propose a process and related product solving the mentioned problems in further simplification of the process and reduction of utilized material.

### SUMMARY OF THE INVENTION

Accordingly, it is an object of the present invention to propose a process to manufacture a heat exchange, the process using less brazing clad as in the prior art.

In carrying out the above object and other objects, features, and advantages, the present invention provides a process to manufacture a heat exchanger according to the preamble of claim 1.

Specifically, the present invention is a process to manufacture a brazed heat exchanger comprising a tubular tank and at least one tube inserted in a corresponding slot operated in the tubular tank, the at least one tube being in fluid communication with the tubular tank. The process is comprises the steps of
- providing a rectangular metal sheet having longitudinal edges of length equal to the length of the tubular tank, and transversal widths equal to the circumference of the tubular tank. The metal sheet is provided with notches
- forming the metal sheet in a tubular shape so longitudinal edges join and the notches close thus slots are formed, and an edges-joining-line is created. This edges-joining-line is discontinued as being interrupted by the slots.
- providing the at least one tube with brazing clad on at least one end of the tube,
- engaging the end of the tube that is provided with brazing clad into the slot formed in the tubular tank, and finally,
- brazing the assembly.

Advantageously, in these steps,
- the brazing clad can exclusively be provided on the tube, and
- the metal sheet be consequently free of brazing clad.

The tube and the tank as well as the edges-joining-line are then brazed exclusively with the brazing clad flowing from the tube.

Also, the rectangular metal sheet can be provided with notches operated on both longitudinal edges.

More particularly, the rectangular metal sheet can be provided with notches oppositely aligned by pair, so when the metal sheet is put in a tubular shape each notch faces its opposite notch forming a closed slot.

Furthermore, the notches oppositely aligned by pair, can have equal length, so when the metal sheet is rolled the edges-joining-line is discontinued as interrupted by the middle of each slot.

The process comprises the additional step of:
- providing a metallic flat separator having a main body with substantially the same dimensions as the internal section of the tubular tank and a tab extending from said body,
- providing an elongated slot for the separator,
- forming in the metal sheet an opening so, after the forming step of the process, said opening is substantially diametrally positioned from said elongated slot,
- inserting the separator through said elongated slot and engaging the tab in the opening.

The elongated slot dedicated to the insertion of the separator enables the insertion of said separator, the body of which fully occupying the internal section of the metal sheet in a tubular shape.

Additionally, the separator is provided with at least one lateral arm extending from the body and following the body so an indentation is formed between the body and the lateral arm and, when the body is inserted in the elongated slot, the wall of the tubular tank engages in the indentation, the lateral arm staying outside the tubular tank.

Advantageously, the separator can be provided with two lateral arms symmetrically extending from the body and following said body so two indentations are formed between the body and the lateral arms. Consequently, when the body is inserted in the elongated slot, the wall of the tubular tank engages in the indentations, the two lateral arms staying outside the tank. Advantageously, prior to brazing, the lateral arms maintain the metal sheet in the tubular shape and secure the positioning of the separator in the tubular tank.

To braze the assembly, brazing clad is provided on the separator and, when brazing the assembly in a furnace, the brazing clad on the separator flows from the separator to the intersection of the tank and the separator to braze the separator in the tubular tank.

More generally, the process of the present invention is applicable when two parallel tubular tanks are provided, both being free of brazing clad. The separators are inserted in the tubular tanks, the separators being provided with brazing clad. After, the tubular tanks are interconnected with a plurality of tubes provided with brazing clad. Also, cooling fins are placed between the tubes, the cooling fins being free of brazing clad. Finally, the assembly is brazed so, the brazing clad present on the separator melts and flows between the separator and the internal section of the tubular tank, brazing the separators in the tank and, the brazing clad present on the ends of the tubes flows around the slots between the tubes and the tanks as well as along the edges-joining-line extending between two consecutive slots and, the brazing clad present on the tubes brazes the cooling fins with the tubes.

The step of the process by which the metal sheet is formed in a tubular shape is rolling or stamping.The present invention also relates to a brazed heat exchanger assembly comprising at least one tubular tank, at least one tube in fluid connection with said tank, the tubular tank having a discontinued edges-joining-line interrupted at the connection with the at least one tube.

The present invention also relates to a brazed heat exchanger assembly having two tubular tanks, and a plurality of tubes interconnecting said tubular tanks, and where at least one of the tubular tanks has a discontinued edges-joining-line interrupted at the connection with the tubes.

Also, the brazed heat exchanger assembly can comprise a separator inserted in a slot of a tubular tank. The separator is provided with at least one arm extending along the outside surface of the tubular tank for maintaining, prior to brazing, the separator in place as well as the tubular tank in a tubular shape.

### BRIEF DESCRIPTION OF THE DRAWINGS

The present invention is now described by way of example with reference to the accompanying drawings in which:
Figure 1 is a general view of a brazed heat exchanger manufactured according to the process of the invention.
Figure 2 is an isometric view of a flat metal sheet provided with notches, aligned by pair, on each longitudinal edge.
Figure 3 is an isometric view of the metal sheet of Figure 2 after rolling.
Figure 4 is a transversal section of the rolled metal sheet of Figure 3 through an elongated slot where a separator has been inserted.
Figure 5 is an isometric view of the rolled metal sheet of Figure 3 provided with a separator of Figure 4 and end caps.
Figure 6 is an isometric view of the heat exchanger where all components are ready to be put place.
Figure 7 is a transversal section of the heat exchanger, through a flat tube interconnecting two tubular tanks.
Figure 8 is an isometric view detailing the assembly of a tank with tubes and a separator before the brazing stage of the process.
Figure 9 is the isometric view of Figure 8 after the brazing step of the process.

### DESCRIPTION OF THE PREFERRED EMBODIMENTS

In the following description, similar elements could be designated with the same reference numbers.

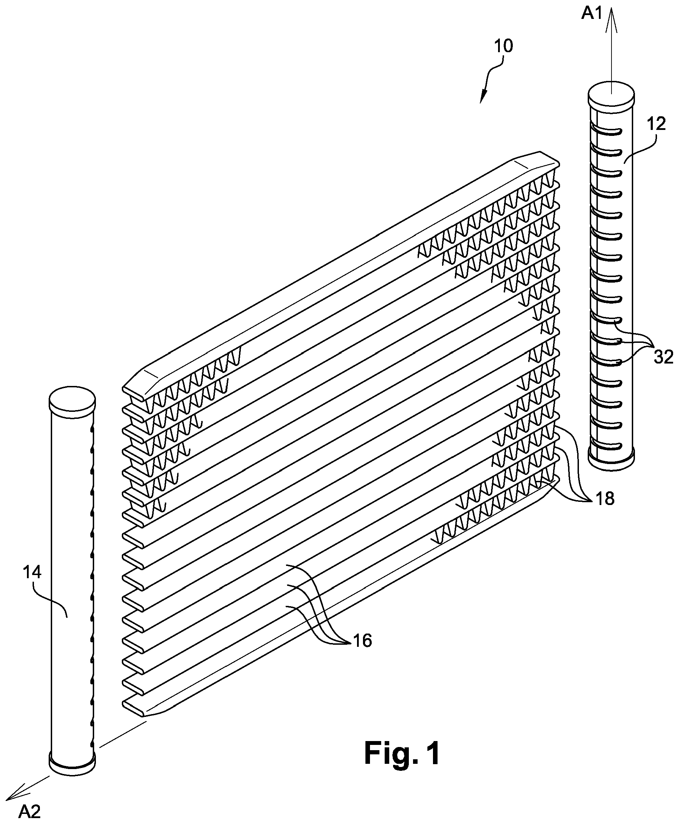

A heat exchanger 10, as shown on Figure 1, comprises a first tubular tank 12 extending along a longitudinal axis A1 and a second tubular tank 14 that is parallel to the first tank 12. The first tank 12 is provided with a fluid inlet (not represented). The second tank 14 is provided with a fluid outlet (not represented). The tanks 12, 14, are in fluid connection as being transversally interconnected by a plurality of flat tubes 16 extending along a transversal axis A2. Between any two flat tubes 16 are placed cooling fins 18.

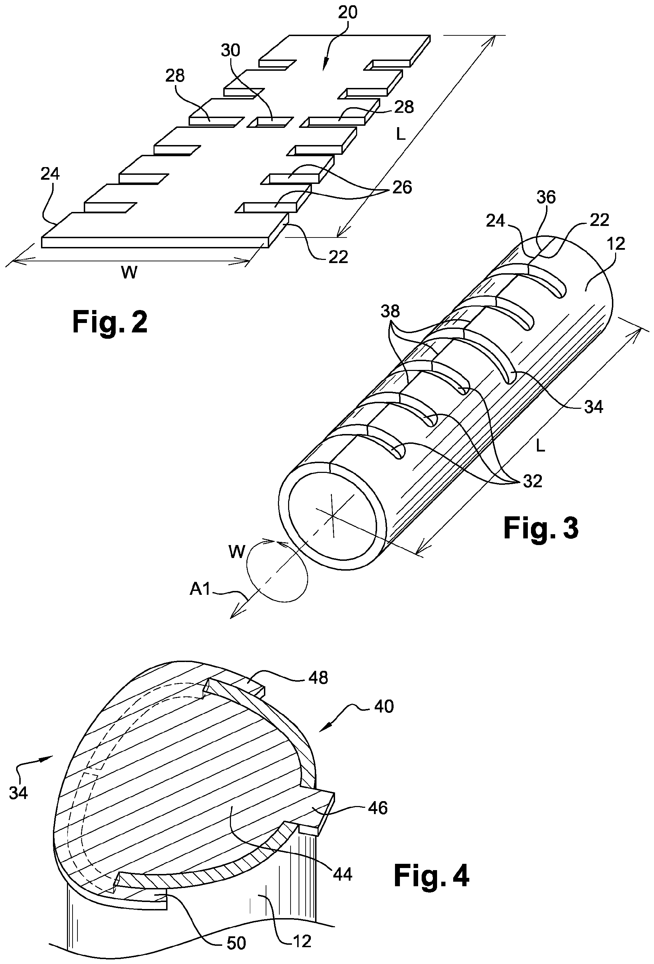

Figures 2 to 9 illustrate the key steps of the process to manufacture the heat exchanger 10. The individual components are initially manufactured and then, certain components are provided with brazing clad. Finally, the heat exchanger is assembled and brazed in a furnace.

The initial step - Figure 2 - is to provide a rectangular flat metal sheet 20 with length L that is the length of the tank 12, 14, extending along the longitudinal axis A1, and width W that is the circumference of the tank 12, 14. The metal sheet 20 has a first longitudinal edge 22 and an opposite second longitudinal edge 24. Both longitudinal edges 22, 24, are provided with a plurality of notches 26. Each notch 26 is perpendicular to the longitudinal edges 22, 24. The notches 26 are aligned and opposed by pair.

In order to be able to place a separator 40 in the tubular tank 12, 14, the metal sheet 20 is further provided with a pair of elongated notches 28 and with an opening 30. As shown on Figure 2, said elongated notches 28 are lengthier than the other notches 26 and the opening 30 is operated between the two elongated notches 28.

Alternative processes can be implemented to get to this initial stage of the invention. The notches 26, 28, can be made prior, or after, cutting the metal sheet 20 to the L x W dimensions. The notches 26, 28, and the opening 30 themselves can be punched or milled or operated with any process.

Furthermore, the metal sheet 20 is represented symmetrical and the notches 26, 28, are represented having equal lengths. In an alternative embodiment's non symmetrical notches, lengthier on one side or alternatively lengthier/shorter is also possible. Furthermore, the notches 26, 28, can be on one side only of the flat metal sheet 20.

The following stage - Figure 3 - consists in forming the tubular tanks 12, 14, by rolling the metal sheet 20 so the two longitudinal edges 22 and 24 join each other. Alternatively, the metal sheet 20 can be stamped instead of being rolled. As shown on Figure 3, the notches 26, aligned and opposed by pair prior to rolling, now face each other, forming a plurality of closed slots 32. The elongated notches 28 now form an elongated slot 34. The two longitudinal edges 22 and 24 are in contact after rolling, forming an edges-joining-line 36 that is interrupted by each slot 32, 34, and that is extending in sections 38 between each two consecutive slots 32, 34.

Alternatively, in the case of notches 26, 28, operated on one longitudinal edge 22 only, the rolling stage of the process brings the open end of the notches 26, 28, in contact with the opposite longitudinal edge 24 thus forming the slots 32, 34.

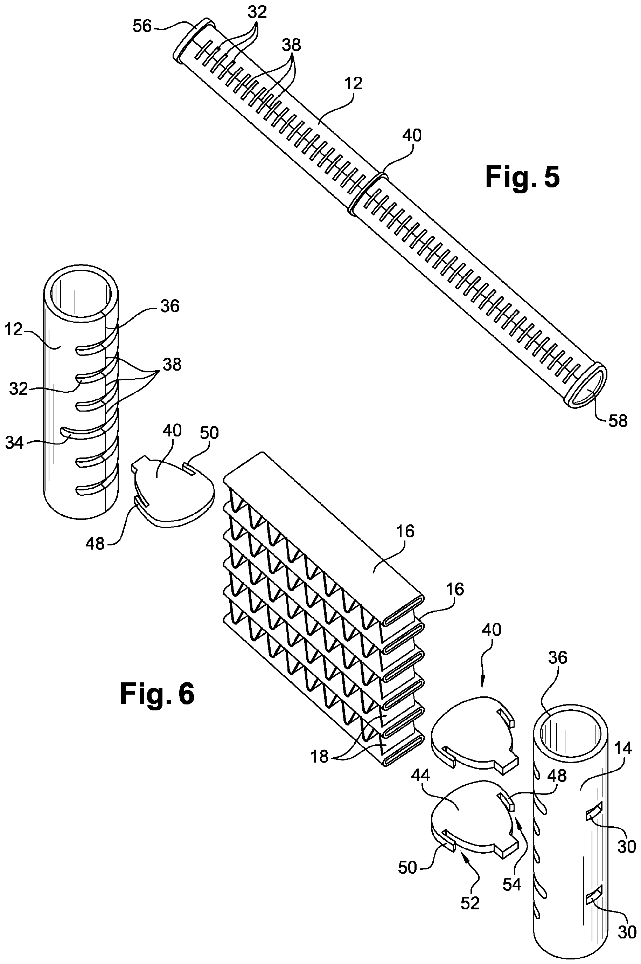

In a parallel step as preparing the tubular tanks 12, 14, the separators 40 are made. As shown on Figure 4 and on Figure 6, the separator 40 is a flat piece of metal comprising a central body 44, from which extends a tab 46 and from which split two lateral arms 48 and 50. The body 44 has the shape and dimensions of the internal cross section of the tanks 12, 14. The lateral arms 48, 50, are parallel to the body 44, forming a pair of indentation 52 and 54 between each arm 48, 50, and the body 44.

In preparation to the brazing step of the process, the separators 40 are provided with brazing clad 42 so they can be brazed inside the tanks 12, 14.

The following stage of the process, illustrated by Figure 4, consists in inserting the separator 40, provided with brazing clad 42, in the elongated slot 34. As shown on Figure 4, the separator 40 inserted in the elongated slot 34 closes the section of the tubular tank 12, 14. The tab 46 is engaged in the opening 30. The arms 48 and 50 stay outside the tubular tank 12, 14, and the wall of the tubular tank, which is the thickness of the metal sheet 20, is engaging itself in the indentations 52 and 54. To enable the passage of the separator 40 through the elongated slot 34, said elongated slot 34 must comprise the largest width of the tubular tanks 12, 14. This is why the elongated notches 28 may be lengthier than the other notches 26. Thanks to the lateral arms 48, 50, surrounding the rolled tubular tanks 12, 14, said tanks 12, 14, are, prior to brazing, maintained in a rolled configuration. This is illustrated by Figure 4. In addition to the separator 40, two end caps 56, 58 are placed in the extremities of the tanks 12, 14 - Figure 5.

Once the tanks 12, 14, are equipped with separators 40 and end caps 58, 60, the tubes 16 and the cooling fins 18 are available, the brazing step of the process can be prepared.

At first, brazing clad 42 is provided on the flat tubes 16, as are already the separators 40. The tanks 12, 14, and the cooling fins 18 remain free of brazing clad 42.

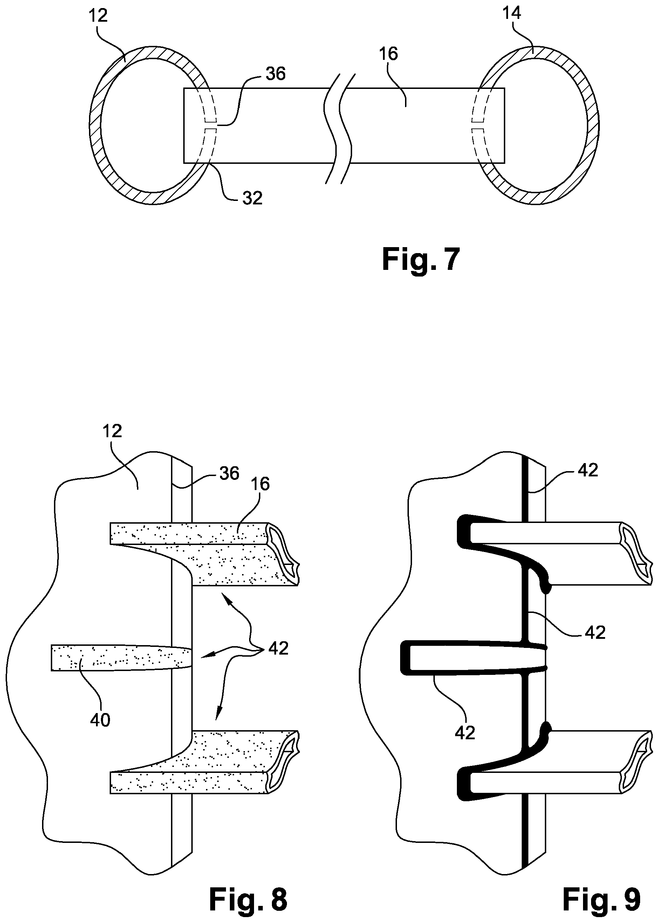

At second, the components are assembled as illustrated on Figure 6 and on Figure 7. The tubular tanks 12, 14, are positioned parallel to each other, the slots 32, 34, facing each other. They are equipped, as previously described by separators 40. As presented on Figure 6, the tanks 12, 14, may be equipped with more than one separator 40. The flat tubes 16 are presented between the tanks 12, 14, and engaged in the slots 32 - Figure 7. Between any two flat tubes 16 are placed the cooling fins 18.

It is known that too much brazing clad 42 in the brazing joint between two parts generates erosion during brazing, reducing the wall thickness of the brazed parts. It is important that the quantity of brazing clad 42 is limited to the necessary minimum. In this aim, one object of the present invention is to manufacture the heat exchanger 10 in using less clad 42 as in the prior art. The tubular tanks 12, 14, and the cooling fins 18 are consequently free of brazing clad while the flat tubes 16 and the separators 40 are provided with brazing clad 42.

The final stage of manufacturing - Figure 8 and Figure 9 - consists in the brazing operation of the assembly. This is usually done by placing the assembly in a furnace that is heated to the appropriate temperature. In the furnace, the brazing clad 42 which is on the tubes 16 and on the separator 40 melts and flows to all intersections. It flows around the slots 32, brazing the tubes 16 with the tanks 12, 14. It flows along the sections 38 of the edges-joining-line 36, brazing the tubular tanks 12, 14. It flows around the edges of the separator 40 brazing said separator 40 in position in the tanks 12, 14. The sections 38 of the edges-joining-line 36 are consequently exclusively brazed by the brazing clad 42 that is provided on the tubes 16.

To achieve the objective of saving brazing clad 42 over the process of the prior art, the quantity of brazing clad 42 is preferably, as described above, exclusively provided on the tubes 16.Alternatively, the brazing clad 42 can be split between the tubes 16 and the tanks 12, 14.

## Claims

1. Process to manufacture a brazed heat exchanger (10) comprising a tubular tank (12) and at least one tube (16) inserted in a corresponding slot (32) operated in the tubular tank (12), the at least one tube (16) being in fluid communication with the tubular tank (12), the process being **characterized in that** it comprises the steps of:
- providing a rectangular metal sheet (20) having longitudinal edges (22, 24) of length (L) equal to the length of the tubular tank (12), and transversal widths (W) equal to the circumference of the tubular tank (12), the metal sheet (20) being provided with notches (26) operated on one longitudinal edge (22, 24) of the metal sheet (20), the notches (26) being in the same number as the number of tubes (16) to be connected to the tank (12),
- providing a metallic flat separator (40) having a main body (44) with substantially the same dimensions as the internal section of the tubular tank (12, 14) and a tab (46) extending from said body (44), and at two lateral arms (48, 50) symmetrically extending from the body (44) and following the body (44) so an indentation (52, 54) is being formed between the body (44) and each lateral arm (48, 50),
- forming in the metal sheet (20) an elongated slot (34) for the separator (40),
- forming in the metal sheet (20) an opening (30) for the tab (46),
- forming the metal sheet (20) in a tubular shape so the longitudinal edges (22, 24) join and the notches (26) close thus forming slots (32), and creating an edges-joining-line (36) that is discontinued as being interrupted by the slots (32), and by the elongated slot (34), the opening (30) for the tab being diametrically positioned from the elongated slot (34),
- inserting the separator (40) through the elongated slot (34) and engaging the tab (46) in the opening (30) and engaging the wall of the tubular tank (12, 14) in the indentations (52, 54), the lateral arms (48, 50) staying outside the tubular tank (12, 14) thus maintaining the metal sheet (20) in the tubular shape and further securing the positioning of the separator (40) in the tubular tank (12, 14),
- providing the at least one tube (16) with brazing clad (42) on at least one end of the tube (16),
- engaging the end of the tube (16) that is provided with brazing clad (42) into the slot (32) formed in the tubular tank (12),
- brazing the assembly.

2. Process as set forth in claim 1 wherein
- the brazing clad (42) is being exclusively provided on the tube (16),
- the metal sheet (20) is being free of brazing clad (42) so, the tube (16) and the tank (12) as well as the edges-joining-line (36) are being brazed exclusively with the brazing clad (42) flowing from the tube (16).

3. Process as set forth in any of the preceding claims wherein
- the rectangular metal sheet (20) is being provided with notches (26) operated on both longitudinal edges (22, 24).

4. Process as set forth in claim 3 wherein
- the rectangular metal sheet (20) is being provided with notches (26) oppositely aligned by pair,
- the metal sheet (20) is being put in a tubular shape so each notch (26) faces its opposite notch thus forming a closed slot (32).

5. Process as set forth in claim 4 wherein
- the notches (26), oppositely aligned by pair, are having equal length, so when the metal sheet (20) is being formed in a tubular shape the edges-joining-line (36) is being discontinued as being interrupted by the middle of each slot (32).

6. Process as set in any of the preceding claim, wherein the elongated slot (34) dedicated to the insertion of the separator (40) enables the insertion of said separator (40), the body (44) of which fully occupying the internal section of the metal sheet in a tubular shape (20).

7. Process as set in any of the preceding claim further comprising the step of:
- providing brazing clad (42) on the separator (40),
- brazing the assembly, the brazing clad (42) on the separator (40) flowing from the separator (40) to the intersection of the tank (12, 14) and the separator (40) to braze the separator (40) in the tubular tank (12, 14).

8. Process as set in any of the preceding claim wherein
- two parallel tubular tanks (12,14) are being provided, both being free of brazing clad,
- the separators (40) are being inserted in the tubular tanks (12, 14) the separators (40) being provided with brazing clad (42),
- the tubular tanks (12, 14) are being interconnected with a plurality of tubes (16), the tubes (16) being provided with brazing clad (42),
- cooling fins (18) are being placed between the tubes (16), the cooling fins (18) being free of brazing clad,
- the assembly is being brazed so
- the brazing clad (42) present on the separator (40) melts and flows between the separator (40) and the internal section of the tubular tank (12, 14), brazing the separators (40) in the tank (12, 14) and,
- the brazing clad (42) present on the ends of the tubes (16) flows around the slots (32) between the tubes (16) and the tanks (12, 14) as well as along the edges-joining-line (36) extending between two consecutive slots (32) and,
- the brazing clad (42) present on the tubes (16) brazes the cooling fins (18) with the tubes (16).

9. Process as set in any of the preceding claim wherein the step of forming the metal sheet (20) in a tubular shape is rolling or stamping.

## Patentansprüche

1. Verfahren zu dem Herstellen eines hartgelöteten Wärmetauschers (10) umfassend einen rohrförmigen Behälter (12) und mindestens ein Rohr (16), das in einen entsprechenden in dem rohrförmigen Behälter (12) durchgeführten Schlitz (32) eingeführt ist, wobei das mindestens eine Rohr (16) in Fluidverbindung mit dem rohrförmigen Behälter (12) steht, wobei das Verfahren **dadurch gekennzeichnet ist, dass** es die Schritte umfasst:
Bereitstellen eines rechteckigen Metallblechs (20), das Längskanten (22, 24) von einer Länge (L) gleich der Länge des rohrförmigen Behälters (12) und Querbreiten (W) gleich dem Umfang des rohrförmigen Behälters (12) aufweist, wobei das Metallblech (20) mit Kerben (26) bereitgestellt ist, die an einer Längskante (22, 24) des Metallblechs (20) durchgeführt sind, wobei die Kerben (26) in derselben Anzahl wie die Anzahl der mit dem Behälter (16) zu verbindenden Rohre (12) vorliegen,
Bereitstellen eines metallischen flachen Abscheiders (40), der einen Hauptkörper (44) mit in dem Wesentlichen denselben Abmessungen wie der Innenabschnitt des rohrförmigen Behälters (12, 14) und eine sich von diesem Körper (44) erstreckende Lasche (46) aufweist, und an zwei seitlichen Armen (48, 50), die sich symmetrisch von dem Körper (44) erstrecken und dem Körper (44) folgen, sodass eine Vertiefung (52, 54) zwischen dem Körper (44) und jedem seitlichen Arm (48, 50) gebildet wird,
Bilden eines länglichen Schlitzes (34) für den Abscheider (40) in dem Metallblech (20),
Bilden einer Öffnung (30) für die Lasche (46) in dem Metallblech (20),
Bilden des Metallbleches (20) in einer rohrförmigen Form, sodass sich die Längskanten (22, 24) verbinden und die Kerben (26) schließen und somit Schlitze (32) bilden, und Erzeugen einer Kantenverbindungslinie (36), die nicht kontinuierlich ist, da sie von den Schlitzen (32) und dem länglichen Schlitz (34) unterbrochen wird, wobei die Öffnung (30) für die Lasche diametral von dem länglichen Schlitz (34) positioniert ist,
Einführen des Abscheiders (40) durch den länglichen Schlitz (34) und Eingreifen der Lasche (46) in die Öffnung (30) und Eingreifen der Wand des rohrförmigen Behälters (12, 14) in die Vertiefungen (52, 54), wobei die lateralen Arme (48, 50) außerhalb des rohrförmigen Behälters (12, 14) bleiben und somit das Metallblech (20) in der rohrförmigen Form bewahren und weiter die Positionierung des Abscheiders (40) in dem rohrförmigen Behälter (12, 14) sichern,
Bereitstellen des mindestens einen Rohrs (16) mit Hartlotüberzug (42) an mindestens einem Ende des Rohrs (16),
Eingreifen des Endes des Rohrs (16), das mit Hartlotüberzug (42) bereitstellen ist, in den in dem rohrförmigen Behälter (12) gebildeten Schlitz (32),
Hartlöten der Baugruppe.

2. Verfahren nach Anspruch 1, wobei
der Hartlotüberzug (42) ausschließlich auf dem Rohr (16) bereitgestellt ist,
das Metallblech (20) frei von Hartlotüberzug (42) ist, sodass das Rohr (16) und der Behälter (12) sowie die Kantenverbindungslinie (36) ausschließlich mit dem Hartlotüberzug (42) hartgelötet werden, der von dem Rohr (16) fließt.

3. Verfahren nach einem der vorstehenden Ansprüche, wobei
das rechteckige Metallblech (20) mit Kerben (26) bereitgestellt ist, die an beiden Längskanten (22, 24) durchgeführt sind.

4. Verfahren nach Anspruch 3, wobei
das rechteckige Metallblech (20) mit Kerben (26) bereitgestellt ist, die an beiden, die paarweise gegenüberliegend ausgerichtet sind,
das Metallblech (20) in eine rohrförmige Form versetzt wird, sodass jede Kerbe (26) ihrer gegenüberliegenden Kerbe zugewandt ist, wodurch ein geschlossener Schlitz (32) gebildet wird.

5. Verfahren nach Anspruch 4, wobei
die paarweise gegenüberliegend ausgerichteten Kerben (26) eine gleiche Länge aufweisen, sodass, wenn das Metallblech (20) in einer rohrförmigen Form geformt wird, die Kantenverbindungslinie (36) nicht kontinuierlich ist, da sie von der Mitte jedes Schlitzes (32) unterbrochen wird.

6. Verfahren nach einem der vorstehenden Ansprüche, wobei der längliche Schlitz (34), der für die Einführung des Abscheiders (40) bestimmt ist, die Einführung dieses Abscheiders (40) ermöglicht, wobei dessen Körper (44) den Innenabschnitt des Metallblechs in einer rohrförmigen Form (20) vollständig ausfüllt.

7. Verfahren nach einem der vorstehenden Ansprüche, weiterhin umfassend den Schritt:
Bereitstellen des Hartlotüberzugs (42) auf dem Abscheider (40),
Hartlöten der Baugruppe, wobei der Hartlotüberzug (42) auf dem Abscheider (40) von dem Abscheider (40) auf den Schnittpunkt von dem Behälter (12, 14) und dem Abscheider (40) fließt, um den Abscheider (40) in dem rohrförmigen Behälter (12, 14) hartzulöten.

8. Verfahren nach einem der vorstehenden Ansprüche, wobei
zwei parallele rohrförmige Behälter (12, 14) bereitgestellt werden, die beide frei von Hartlotüberzug sind,
die Abscheider (40) in die rohrförmigen Behälter (12, 14) eingeführt werden, wobei die Abscheider (40) mit Hartlotüberzug (42) bereitgestellt sind,
die rohrförmigen Behälter (12, 14) mit einer Vielzahl von Rohren (16) miteinander verbunden werden, wobei die Rohre (16) mit Hartlotüberzug (42) bereitgestellt sind,
Kühlrippen (18) zwischen den Rohren (16) platziert werden, wobei die Kühlrippen (18) frei von Hartlotüberzug sind,
die Baugruppe so hartgelötet wird, dass
- der auf dem Abscheider (40) vorhandene Hartlotüberzug (42) schmilzt und zwischen den Abscheider (40) und den Innenabschnitt des rohrförmigen Behälters (12, 14) fließt, wobei die Abscheider (40) in dem Behälter (12, 14) hartgelötet werden, und
- der auf den Enden der Rohre (16) vorhandene Hartlotüberzug (42) um die Schlitze (32) zwischen den Rohren (16) und den Behältern (12, 14) sowie entlang der sich zwischen zwei aufeinanderfolgenden Schlitzen (32) erstreckenden Kantenverbindungslinie (36) fließt und
- der auf den Rohren (16) vorhandene Hartlotüberzug (42) die Kühlrippen (18) mit den Rohren (16) hartlötet.

9. Verfahren nach einem der vorstehenden Ansprüche, wobe der Schritt des Bildens des Metallblechs (20) zu einer rohrförmigen Form Walzen oder Stanzen ist.

## Revendications

1. Procédé pour fabriquer un échangeur de chaleur brasé (10) comprenant un réservoir tubulaire (12) et au moins un tube (16) inséré dans une fente correspondante (32) mise en oeuvre dans le réservoir tubulaire (12), l'au moins un tube (16) étant en communication fluidique avec le réservoir tubulaire (12), le procédé étant **caractérisé en ce qu'**il comprend les étapes de :
- fourniture d'une feuille rectangulaire de métal (20) ayant des bords longitudinaux (22, 24) de longueur (L) égale à la longueur du réservoir tubulaire (12), et des largeurs transversales (W) égales à la circonférence du réservoir tubulaire (12), la feuille de métal (20) étant munie d'encoches (26) mises en oeuvre sur un bord longitudinal (22, 24) de la feuille de métal (20), le nombre d'encoches (26) étant le même que le nombre de tubes (16) à relier au réservoir (12),
- fourniture d'un séparateur plat métallique (40) ayant un corps principal (44) ayant sensiblement les mêmes dimensions que la section interne du réservoir tubulaire (12, 14) et une patte (46) s'étendant à partir dudit corps (44), et au niveau de deux bras latéraux (48, 50) s'étendant de façon symétrique à partir du corps (44) et après le corps (44) de sorte qu'une indentation (52, 54) est formée entre le corps (44) et chaque bras latéral (48, 50),
- formation dans la feuille de métal (20) d'une fente allongée (34) pour le séparateur (40),
- formation dans la feuille de métal (20) d'une ouverture (30) pour la patte (46),
- formation de la feuille de métal (20) en une forme tubulaire de sorte que les bords longitudinaux (22, 24) se rejoignent et que les encoches (26) se referment formant ainsi des fentes (32), et créant une ligne de jonction de bords (36) qui est discontinue en étant interrompue par les fentes (32) et par la fente allongée (34), l'ouverture (30) pour la patte étant diamétralement positionnée par rapport à la fente allongée (34),
- insertion du séparateur (40) à travers la fente allongée (34) et mise en prise de la patte (46) dans l'ouverture (30) et mise en prise de la paroi du réservoir tubulaire (12, 14) dans les indentations (52, 54), les bras latéraux (48, 50) restant à l'extérieur du réservoir tubulaire (12, 14) maintenant ainsi la feuille de métal (20) dans la forme tubulaire et garantissant en outre le positionnement du séparateur (40) dans le réservoir tubulaire (12, 14),
- fourniture de l'au moins un tube (16) avec un enrobé de brasage (42) sur au moins une extrémité du tube (16),
- mise en prise de l'extrémité du tube (16) qui est munie d'un enrobé de brasage (42) dans la fente (32) formée dans le réservoir tubulaire (12),
- brasage de l'ensemble.

2. Procédé selon la revendication 1, dans lequel
- l'enrobé de brasage (42) est fourni de manière exclusive sur le tube (16),
- la feuille de métal (20) est exempte d'enrobé de brasage (42) ainsi le tube (16) et le réservoir (12) aussi bien que la ligne de jonction de bords (36) sont brasés de manière exclusive avec l'enrobé de brasage (42) s'écoulant à partir du tube (16).

3. Procédé selon l'une quelconque des revendications précédentes, dans lequel
- la feuille rectangulaire de métal (20) est munie d'encoches (26) mises en oeuvre sur les deux bords longitudinaux (22, 24).

4. Procédé selon la revendication 3, dans lequel
- la feuille rectangulaire de métal (20) est munie d'encoches (26) alignées par paire de façon opposée,
- la feuille de métal (20) est mise en une forme tubulaire de sorte que chaque encoche (26) fait face à son encoche opposée formant ainsi une fente fermée (32).

5. Procédé selon la revendication 4, dans lequel
- les encoches (26), alignées par paire de façon opposée, ont une longueur égale, ainsi lorsque la feuille de métal (20) est formée en une forme tubulaire la ligne de jonction de bords (36) est discontinuée en étant interrompue au milieu de chaque fente (32).

6. Procédé selon l'une quelconque des revendications précédentes, dans lequel la fente allongée (34) dédiée à l'insertion du séparateur (40) permet l'insertion dudit séparateur (40), dont le corps (44) occupe entièrement la section interne de la feuille de métal en une forme tubulaire (20).

7. Procédé selon l'une quelconque des revendications précédentes, comprenant en outre l'étape de :
- fourniture d'un enrobé de brasage (42) sur le séparateur (40),
- brasage de l'ensemble, l'enrobé de brasage (42) sur le séparateur (40) s'écoulant à partir du séparateur (40) jusqu'à l'intersection du réservoir (12, 14) et du séparateur (40) pour braser le séparateur (40) dans le réservoir tubulaire (12, 14).

8. Procédé selon l'une quelconque des revendications précédentes, dans lequel
- deux réservoirs tubulaires parallèles (12, 14) sont prévus, les deux étant exempts d'enrobé de brasage,
- les séparateurs (40) sont insérés dans les réservoirs tubulaires (12, 14), les séparateurs (40) étant munis d'enrobé de brasage (42),
- les réservoirs tubulaires (12, 14) sont interconnectés avec une pluralité de tubes (16), les tubes (16) étant munis d'enrobé de brasage (42),
- des ailettes de refroidissement (18) sont placées entre les tubes (16), les ailettes de refroidissement (18) étant exemptes d'enrobé de brasage,
- l'ensemble est brasé ainsi
- l'enrobé de brasage (42) présent sur le séparateur (40) fond et s'écoule entre le séparateur (40) et la section interne du réservoir tubulaire (12, 14), brasant les séparateurs (40) dans le réservoir (12, 14), et
- l'enrobé de brasage (42) présent sur les extrémités des tubes (16) s'écoule autour des fentes (32) entre les tubes (16) et les réservoirs (12, 14) aussi bien que le long de la ligne de jonction de bords (36) s'étendant entre deux fentes consécutives (32), et
- l'enrobé de brasage (42) présent sur les tubes (16) brase les ailettes de refroidissement (18) avec les tubes (16).

9. Procédé selon l'une quelconque des revendications précédentes, dans lequel l'étape de formation de la feuille de métal (20) en une forme tubulaire est par cylindrage ou estampage.
